# EUROPEAN PATENT SPECIFICATION

(11) **EP 2 009 341 B1**
(45) Date of publication and mention of the grant of the patent: **25.11.2009**
(21) Application number: 07111469.8
(22) Date of filing: 29.06.2007
(51) Int. Cl.: F16L 19/028

(54) **Method for obtaining a sealing junction for a rigid pipe intended to convey fluid under pressure**
Verfahren für den Erhalt einer Dichtungsverbindung für ein Hartrohr zur Förderung von Fluid unter Druck
Méthode pour obtenir un joint d'étanchéité pour un tuyau rigide destiné à transporter du fluide sous pression

(43) Date of publication of application: 31.12.2008
(73) Proprietor: FOR S.p.A., 44028 Poggio Renatico (FE) (IT)
(72) Inventor: Redin, Reginald, 54860 Hanourt (FR)
(74) Representative: Lanzoni, Luciano

(56) References cited:
- US-A- 5 806 166
- US-A1- 2004 135 322
- US-B1- 6 543 817

## Description

The present invention relates to a method for obtaining a sealing junction for a rigid pipe intended to convey fluid under pressure.

In pressurised fluid transportation systems, sealing junctions are commonly used to connect pipes to other pipes or to other parts of the system. Such junctions usually comprise a connector at the end of the pipe, which can cooperatively engage with another connector. A sealing element is usually provided in order to create a fluid-tight junction.

It is known from the prior art to provide the pipe with a flared end so as to provide a surface for the sealing element to operate. A flared end also helps to maintain the connector in position, preventing it from slipping off the end of the pipe. However, additional securing means are necessary in order to prevent axial movement of the connector also in the opposite direction. Furthermore, additional securing means are necessary in order to prevent the sealing element from being mispositioned.

US patent no. 6,543,817 discloses a process for forming radially upset pipe flanges above and below a connector, thereby preventing axial movement thereof. One of these flanges also provides a surface for the sealing element to operate. The element is kept in place by a flared end of the pipe created in the final step of the process.

While this prior art undoubtedly secures the connector to the end of the pipe, and helps keep the sealing element in place, it has several drawbacks. Most importantly, creation of the two radial flanges can cause excessive mechanical stress to the pipe which may in turn cause breakage. In particular, the flange supporting the sealing element must be significantly compacted in order to provide a flat supporting surface. Moreover, the flanges disrupt the smooth flowpath of the pressurised fluid, thereby possibly causing disruptive turbulence.

US patent no. 5,806,166 discloses another process for forming a sealing junction for rigid pipe in which a free end of the pipe is deformed for creating a groove having two walls defined by a deformed portion of the pipe and a wall defined by an inner wall of a connecting part surrounding the pipe.

The deformation of the free end of the pipe is carried out by means of a rivet snap tool including a truncated central protrusion and a rib.

The final design of the connector arrangement of the prior art is rather complex. The use of a flared end to keep the sealing element in place requires reshaping of the pipe in order to replace or repair the element. Furthermore, the ability of the sealing element to operate is severely limited by the presence of the flared end: deformation of the element is only possible in the distance between the top of the sealing element and the top of the flared end of the pipe. By definition, this distance must be small, or else the flared end would not perform its retaining function.

The technical task proposed by the present invention is therefore that of providing a method for obtaining a sealing junction for a rigid pipe intended to convey fluid under pressure, which overcomes the noted technical drawbacks of the prior art.

In the scope of this technical task, one object of the invention is that of providing a method for obtaining a sealing junction for a rigid pipe without exerting excessive mechanical stress on the pipe.

Another object of the invention is that of providing a method for obtaining a sealing junction for a rigid pipe with a smooth fluid flowpath.

A further object of the invention is that of providing a method for obtaining a sealing junction of simple design, enabling simple replacement or repair of a sealing element.

A last but not least object of the invention is that of providing a method for obtaining a sealing junction with improved sealing capability.

The technical task, as well as these and other objects, are achieved according to the present invention by providing a method for obtaining a sealing junction for a rigid pipe intended to convey fluid under pressure, characterised in that it comprises the steps of:
first cold forming step of an end of said pipe whereby said pipe is previously blocked into a first mould and subsequently said end is equipped with a collar by a first shaper tool introduced into said end to press it against said mould to match the shape of said mould; and
second cold forming step of said end of said pipe whereby a second shaper tool both pushes said collar against a shoulder of a nipple slidably mounted on said pipe, so as to create at said shoulder a seat defined by the front surface of said collar and the inner lateral wall of said nipple extending from said shoulder to the end of said nipple corresponding to said end of said pipe, and widens the diameter of said pipe to block it against the inner lateral wall of said nipple extending from said shoulder to the opposite end of said nipple;
and positioning a sealing element in said seat.

The creation of a flared end rather than a radially upset tube flange reduces mechanical stress that the pipe is exposed to. Moreover, the mould and the nipple shoulder act as supports for the shaping process, thereby minimising the risk of breakage of the pipe.

In place of flanges, the pipe is prevented from axial movement by the flared end and by the increased inner diameter at the end; blocking it against the inner lateral wall of the nipple helps to secure it thereto, thereby further securing the pipe junction against the parting forces exerted by pressurised fluid flow.

The lack of flanges also helps maintain a smooth fluid flowpath, and the smoothly rounded shape of the inner edge of the collar allows it to effectively convey fluid towards the centre of the pipe.

The positioning of the sealing element in the seat at the nipple shoulder effectively maintains its proper position during operation but allows for simple removal for repair or replacement.

The formation of the collar of the pipe such that it does not extend past the end of the nipple, and the placement of the sealing element at the end of the collar allows for a wide range of deformation of the sealing element, thereby improving the sealing capability of the junction.

Other characteristics of the present invention are moreover defined in the subsequent claims.

Further characteristics and advantages of the present invention will be more evident from the description of a preferred, but not exclusive, embodiment of the method for obtaining a sealing junction for a rigid pipe intended to convey fluid under pressure according to the finding, illustrated in the attached non-limiting drawings, wherein:
Figure 1 shows a cross-section of a pipe during a first step of cold formation of a collar at one end thereof by a first shaper tool against a mould in accordance with one embodiment of the invention;
Figure 2 shows a cross-section of a pipe during a second step of cold formation of a collar at one end thereof by a second shaper tool against a shoulder of a nipple and widening of said pipe to block it against the inner lateral wall of said nipple in accordance with one embodiment of the invention;
Figure 3 shows a cross-section of a pipe during a third step of positioning a sealing element in a seat defined by the front surface of a collar and the inner lateral wall of a nipple at a shoulder thereof in accordance with one embodiment of the invention;
Figure 4 shows a top end view of a sealing element used in a third step according to one embodiment of the invention;
Figure 5 shows a cross-section of a sealing junction in operative mode, as produced by the method in accordance with one embodiment of the invention.

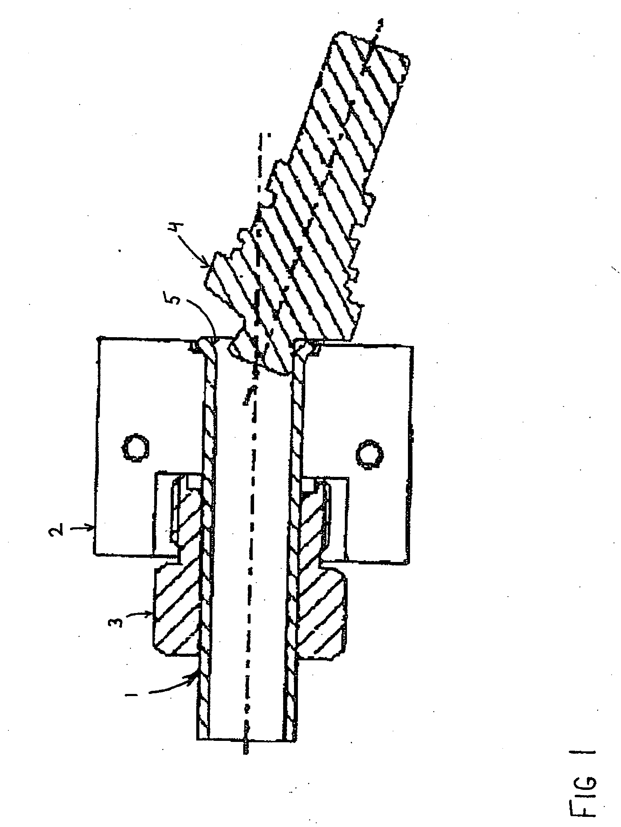

With reference to the above figures, it can be seen that a rigid pipe (1) is blocked into a mould (2) at one end and a nipple (3) is slidably mounted on said pipe. Roto-translational movement of a first shaper tool (4) introduced into the end of the pipe (1) presses it against the mould (2), thereby forming a collar (5) matching the shape of the mould, as shown in Figure 1. The formation is done without the aid of heat. The smoothly rounded shape of the inner edge of the collar allows it to effectively convey fluid towards the centre of the pipe.

The first shaper tool (4) is then removed, as is the mould (2). The nipple (3) is slid along the pipe (1) until it contacts the collar (5). A blocking unit (6) is placed behind the nipple (3) to prevent it from sliding back.

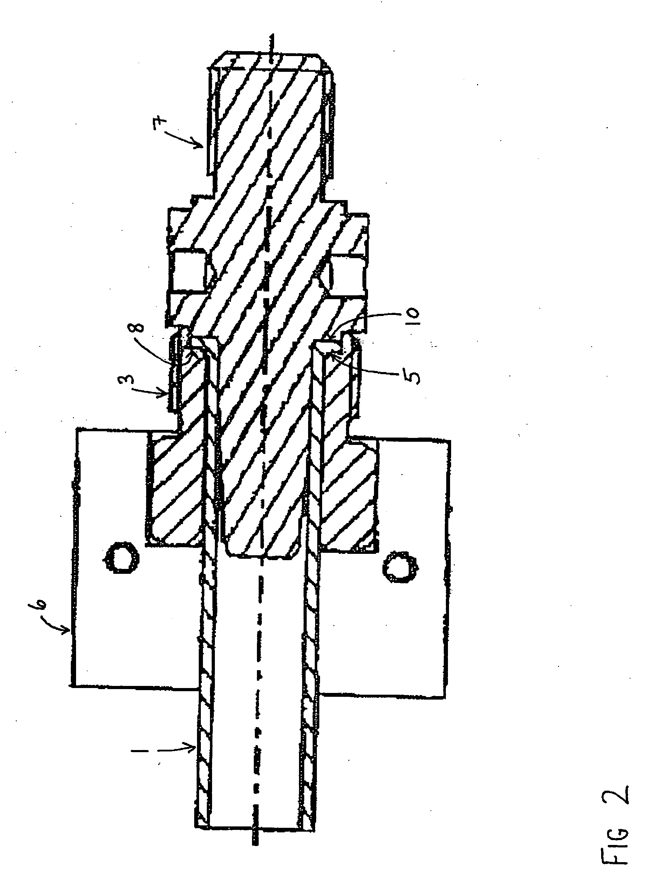

As shown in Figure 2, translational movement of a second shaper tool (7) introduced into the end of pipe (1) both pushes the collar (5) against a shoulder (8) of the nipple (3) and widens the diameter of the pipe to block it against the inner lateral wall of the nipple that extends from the shoulder to the far end of the nipple. The front surface (10) of the collar (5) is thus flat and smooth. Moreover, blocking the pipe against the inner lateral wall of the nipple helps to secure it thereto, thereby further securing the pipe junction against the parting forces exerted by pressurised fluid flow.

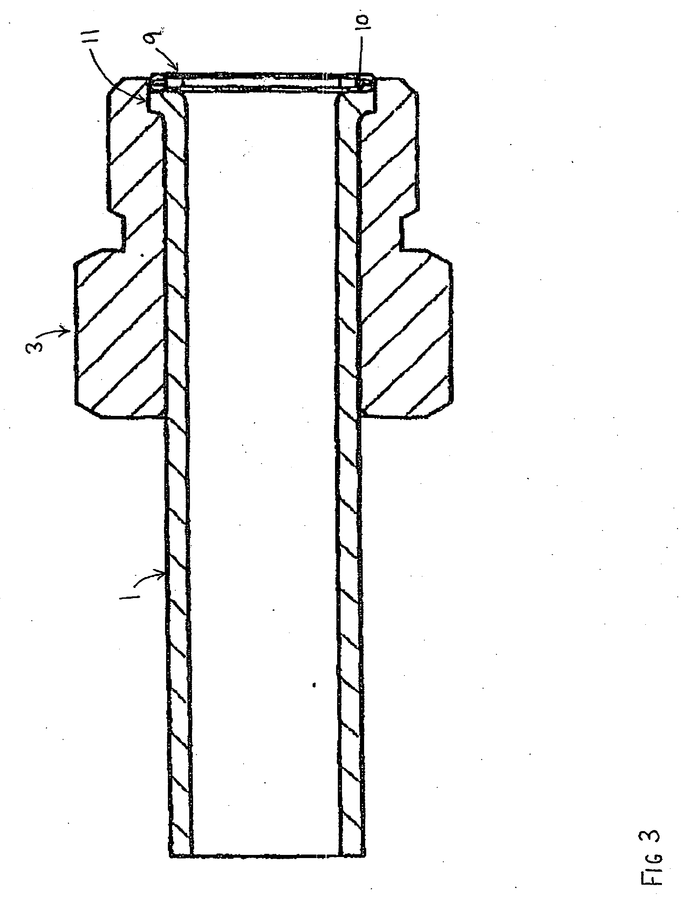

It can be seen that the axial distance between the shoulder (8) and the end of the nipple (3) is greater than the axial thickness of the collar (5). As shown in Figure 3, a sealing element (9) is then positioned in the seat defined by the front surface (10) of the collar and the inner lateral wall (11) of the nipple extending from the shoulder to the corresponding end of the nipple. By positioning the sealing element in this shoulder, it is effectively retained. Furthermore, the smooth and flat surface (10) of the collar (5) ensures good contact between the sealing element (9) and the collar.

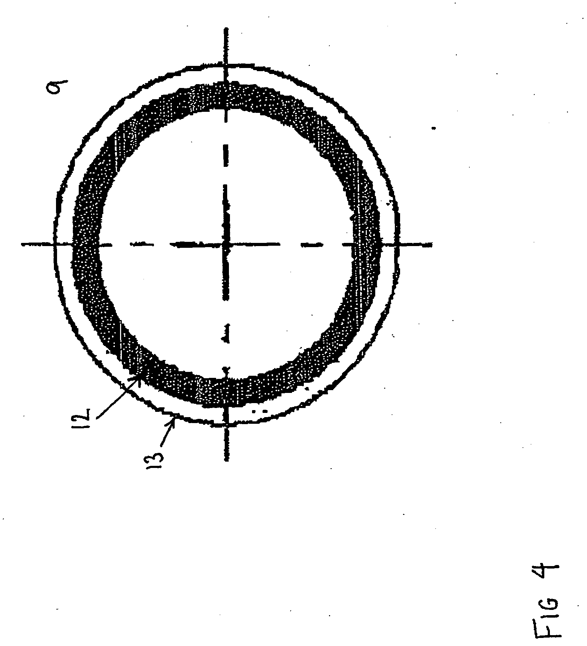

It can be seen in Figure 4 that said sealing element (9) comprises two concentric rings. The inner ring (12) is preferably made of rubber, and is of slightly thicker axial dimension than the outer ring (13), which is preferably made of metal, more preferably iron. This allows for sufficient deformation of the rubber inner sealing ring (12) in order to seal the junction when a second tube is connected, but not beyond an optimal level of deformation.

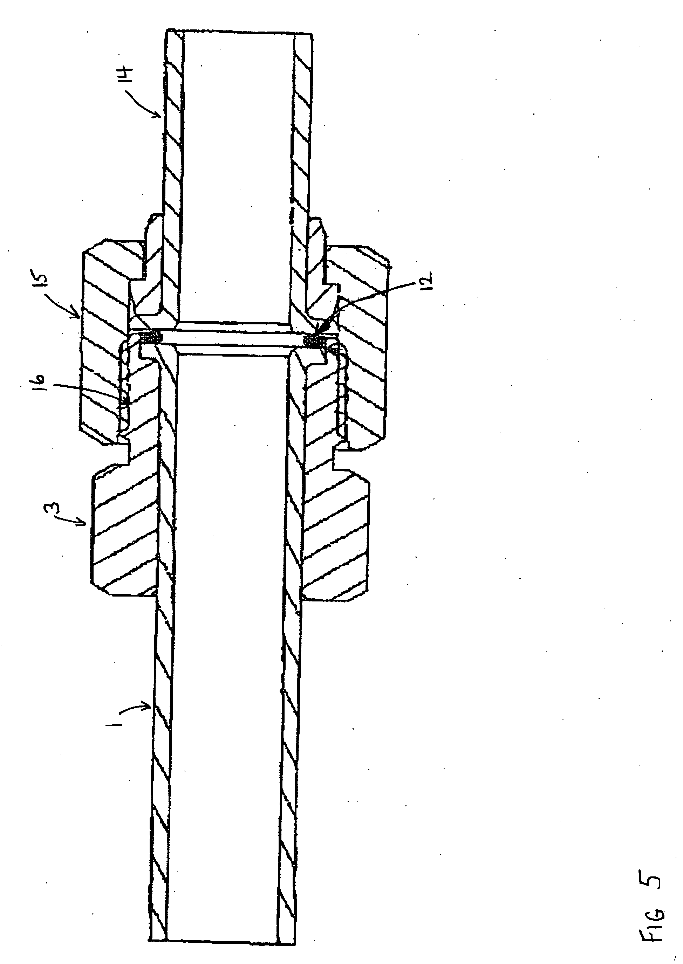

The assembly in operative mode is shown in Figure 5. A second pipe is (14) is held against the inner rubber sealing ring (12) by aid of a nut (15) that engages with the threads (16) of the nipple (3).

The method for obtaining a sealing junction for a rigid pipe intended to convey fluid under pressure thus conceived is susceptible to numerous modifications and variations, all falling within the scope of the inventive concept; furthermore, all details may be substituted by technically equivalent elements.

In practice, any material type or size may be used, according to the needs and the state of the art.

## Claims

1. Method for obtaining a sealing junction for a rigid pipe (1) intended to convey fluid under pressure, **characterised in that** it comprises the steps of:
first cold forming step of an end of said pipe (1) whereby said pipe is previously blocked into a first mould (2) and subsequently said end is equipped with a collar (5) by a first shaper tool (4) introduced into said end to press it against said first mould to match the shape of said first mould;
second cold forming step of said end of said pipe whereby a second shaper tool (7) both pushes said collar (5) against a shoulder (8) of a nipple (3) slidably mounted on said pipe, so as to create at said shoulder a seat defined by the front surface of said collar (5) and the inner lateral wall of said nipple (3) extending from said shoulder (8) to the end of said nipple corresponding to said end of said pipe, and widens the diameter of said pipe to block it against the inner lateral wall of said nipple (3) extending from said shoulder (8) to the opposite end of said nipple; and
positioning a sealing element (9) in said seat.

2. Method of claim 1 wherein said front surface of said collar (5) is formed flat and smooth.

3. Method of any preceding claim wherein said pressing by said first shaper tool (4) is by roto-translational movement against said pipe.

4. Method of any preceding claim wherein said pushing and widening by said second shaper tool (7) is by translational movement against said pipe.

5. Method of any preceding claim wherein said sealing element (9) comprises inner and outer concentric rings, said inner ring 12 consisting of rubber and said outer ring 13 consisting of metal.

6. Method of any preceding claim wherein the axial thickness of said inner ring (12) is greater than that of said outer ring (13).

7. Method of any preceding claim wherein the said axial thickness of said inner ring (12) is greater than the distance between said front surface of said collar (5) and corresponding front end of said nipple (3).

## Patentansprüche

1. Verfahren für den Erhalt einer Dichtungsverbindung für ein Hartrohr (1) zur Förderung von Fluid unter Druck, **dadurch gekennzeichnet, dass** es folgende Schritte beinhaltet:
einen ersten Schritt zur Kaltumformung eines Endes des Rohres (1), wobei das Rohr zuvor in einer ersten Pressform (2) blockiert wird und
anschließend das Ende mit einem Bund (5) versehen wird, indem ein erstes Formungswerkzeug (4) in das Ende eingeführt wird, um es so gegen die erste Pressform zu drücken, dass es sich der Form der ersten Pressform anpasst;
einen zweiten Schritt zur Kaltumformung des Endes des Rohres, wobei ein zweites Formungswerkzeug (7) sowohl den Bund (5) gegen einen Ansatz (8) eines Nippels (3) drückt, der gleitbar auf dem Rohr montiert ist, um an dem Ansatz eine Aufnahme zu erzeugen, die durch die vordere Fläche des Bundes (5) und die innere Seitenwand des Nippels (3) gebildet wird, die sich von dem Ansatz (8) bis zu dem Ende des Nippels erstreckt, das dem ersten Ende des Rohres entspricht, als auch den Durchmesser des Rohres aufweitet, um es gegen die innere Seitenwand des Nippels (3) zu blockieren, die sich von dem Ansatz (8) bis zu dem entgegengesetzten Ende des Nippels erstreckt; und
das Positionieren eines Dichtungselementes (9) in der Aufnahme.

2. Verfahren nach Anspruch 1, worin die vordere Fläche des Bundes (5) flach und glatt ausgebildet ist.

3. Verfahren nach einem der vorhergehenden Ansprüche, worin das durch das erste Formungswerkzeug (4) ausgeübte Drücken durch eine Rotations- und Translationsbewegung gegen das Rohr erfolgt.

4. Verfahren nach einem der vorhergehenden Ansprüche, worin das durch das zweite Formungswerkzeug (7) ausgeübte Schieben und Aufweiten durch eine Translationsbewegung gegen das Rohr erfolgt.

5. Verfahren nach einem der vorhergehenden Ansprüche, worin das Dichtungselement (9) innere und äußere konzentrische Ringe beinhaltet, wobei der innere Ring (12) aus Gummi besteht und der äußere Ring (13) aus Metall besteht.

6. Verfahren nach einem der vorhergehenden Ansprüche, worin die axiale Dicke des inneren Ringes (12) größer ist als die des äußeren Ringes (13).

7. Verfahren nach einem der vorhergehenden Ansprüche, worin die axiale Dicke des inneren Ringes (12) größer ist als der Abstand zwischen der vorderen Fläche des Bundes (5) und dem entsprechenden vorderen Ende des Nippels (3).

## Revendications

1. Une méthode pour obtenir un joint d'étanchéité pour un tuyau rigide (1) destiné à transporter du fluide sous pression, **caractérisée en ce qu'**elle comprend les phases suivantes :
première phase de formage à froid d'une extrémité dudit tuyau (1) pendant laquelle ledit tuyau est préalablement bloqué dans un premier moule (2) et ladite extrémité est ensuite dotée d'un collet (5) par un premier outil de formage (4) introduit dans ladite extrémité pour la presser contre ledit premier moule de manière à épouser la former dudit premier moule ;
deuxième phase de formage à froid de ladite extrémité dudit tuyau pendant laquelle un deuxième outil de formage (7) pousse ledit collet (5) contre un épaulement (8) d'un mamelon (3) monté de façon coulissante sur ledit tuyau de manière à créer, au niveau dudit épaulement, un logement défini par la surface avant dudit collet (5) et la paroi latérale intérieure dudit mamelon (3) s'étendant depuis ledit épaulement (8) jusqu'à l'extrémité dudit mamelon correspondant à ladite extrémité dudit tuyau, et élargit le diamètre dudit tuyau pour le bloquer contre la paroi latérale intérieure dudit mamelon (3) s'étendant depuis ledit épaulement (8) jusqu'à l'extrémité opposée dudit mamelon ; et
positionnement d'un élément d'étanchéité (9) dans ledit logement.

2. La méthode selon la revendication 1, **caractérisée en ce que** ladite surface avant dudit collet (5) est formée de manière à être plate et régulière.

3. La méthode selon l'une quelconque des revendications précédentes, **caractérisée en ce que** la pression exercée par ledit premier outil de formage (4) consiste en un mouvement de roto-translation effectué contre ledit tuyau.

4. La méthode selon l'une quelconque des revendications précédentes, **caractérisée en ce que** ladite poussée et ledit élargissement exécutés par ledit deuxième outil de formage (7) consistent en un mouvement de translation effectué contre ledit tuyau.

5. La méthode selon l'une quelconque des revendications précédentes, **caractérisée en ce que** ledit élément d'étanchéité (9) comprend des bagues concentriques intérieure et extérieure, ladite bague intérieure (12) étant en caoutchouc et ladite bague extérieure (13) étant en métal.

6. La méthode selon l'une quelconque des revendications précédentes, **caractérisée en ce que** l'épaisseur axiale de ladite bague intérieure (12) est supérieure à celle de ladite bague extérieure (13).

7. La méthode selon l'une quelconque des revendications précédentes, **caractérisée en ce que** ladite épaisseur axiale de ladite bague intérieure (12) est supérieure à la distance entre ladite surface avant dudit collet (5) et l'extrémité avant correspondante dudit mamelon (3).
